# EUROPÄISCHE PATENTSCHRIFT

(11) **EP 1 795 768 B1**
(45) Veröffentlichungstag und Bekanntmachung des Hinweises auf die Patenterteilung: **01.10.2008**
(21) Anmeldenummer: 06021822.9
(22) Anmeldetag: 18.10.2006
(51) Int. Cl.: F16B 25/00

(54) **Gewindeschneidende Schraube, insbesondere Betonschraube**
Thread tapping screw, in particular concrete screw
Vis autotaraudeuse, notamment vis à béton

(30) Priorität: 07.12.2005 DE 102005058391
(43) Veröffentlichungstag der Anmeldung: 13.06.2007
(73) Patentinhaber: fischerwerke GmbH & Co. KG, 72178 Waldachtal (DE)
(72) Erfinder: Becker, Jan-Christian, 33803 Steinhagen (DE); Schäffer, Marc, 72160 Horb-Bildechingen (DE); Dixa, Raphael, 72178 Waldachtal (DE)
(74) Vertreter: Suchy, Ulrich Johannes

(56) Entgegenhaltungen:
- WO-A-02/12736
- WO-A-20/05021982
- DE-C- 970 937
- DE-U1- 20 115 111
- US-A1- 4 673 323

## Beschreibung

Die Erfindung betrifft eine gewindeschneidende Schraube, insbesondere eine Betonschraube, mit den Merkmalen des Oberbegriffs des Anspruchs 1. Solche Schrauben sind aus der WO 02/12736 oder der US 4,673,323 bekannt.

Zur Verankerung einer Schraube in einem harten Vollbaustoff wie beispielsweise Beton ist die Verwendung eines Dübels üblich. Aus der DE 297 04 226 U1 ist eine alternative Schraube bekannt, die ohne Verwendung eines Dübels in ein Bohrloch in Beton eindrehbar ist. Der Bohrlochdurchmesser ist größer als ein Gewindekerndurchmesser und kleiner als ein Gewindeaußendurchmesser der Schraube. Zum Eindrehen der Schraube ist ein Schlagschrauber notwendig, der die Schraube mit Drehschlägen beaufschlagt. Das Gewinde der bekannten Schraube ist von Unterbrechungen durchsetzt, die Schneiden bilden. Die Unterbrechungen sind weniger tief als das Gewinde hoch ist, die Unterbrechungen reichen nicht bis zum Gewindekern. Die Schneiden ermöglichen das Schneiden eines Gewindes in den Beton beim Eindrehen der Schraube in das zuvor gebohrte Loch. Die Schraube schneidet sich ihr Gewinde selbst.

Der Erfindung liegt die Aufgabe zugrunde, das Eindrehmoment einer gewindeschneidenden Schraube, insbesondere einer Betonschraube, beim Eindrehen in ein Bohrloch in einem harten Vollbaustoff wie Beton zu verringern.

Diese Aufgabe wird erfindungsgemäß durch die Merkmale des Anspruchs 1 gelöst. Wie beim Stand der Technik weist die erfindungsgemäße Schraube mindestens eine, vorzugsweise mehrere Nuten auf, die in einer Längsrichtung der Schraube verlaufen und das Gewinde durchsetzen. Die Nuten bilden die Unterbrechungen und die Schneiden des Gewindes. Dabei sind die Nuten so tief, dass sie bis in den Gewindekern der Schraube reichen. Der Gewindekern ist in einem vorderen Bereich der Schraube konisch geformt. Erfindungsgemäß nimmt die Tiefe der Nuten vom vorderen Ende der Schraube zum Ende des konischen Bereichs des Gewindekerns ab. Dadurch bilden die Nuten Taschen zur Aufnahme von Gesteinsmehl, womit vom Vollbaustoff beim Schneiden des Gewindes abgetrenntes Material bezeichnet ist. Auch nach dem Bohren im Bohrloch verbliebenes Gesteinsmehl wird in den Nuten aufgenommen. Die Nuten vermeiden, dass Gesteinsmehl einen Zwischenraum zwischen einer Bohrlochwand und dem Gewindekern der Schraube zusetzt, d.h. vollständig ausfüllt und die Reibung beim Eindrehen der Schraube erhöht. Das Eindrehmoment der erfindungsgemäßen Schraube ist dadurch verringert.

Die Nuten müssen nicht gerade und achsparallel, sondern können beispielsweise auch wendelförmig verlaufen. Sind mehrere Nuten vorhanden, müssen diese nicht äquidistant über den Umfang verteilt angeordnet sein. Es sind vorzugsweise mehrere, beispielsweise zwischen zwei und vier Nuten vorgesehen, um zum Einen die Anzahl der Schneiden am Gewinde zu erhöhen und zum Anderen das zur Aufnahme von Gesteinsmehl verfügbare Volumen zu vergrößern.

In bevorzugter Ausgestaltung der Erfindung sind die Nuten nur in einem vorderen Bereich der Schraube vorhanden, also an dem Ende, mit dem voraus die Schraube in das Bohrloch eingedreht wird. Weiter hinten liegende Windungen des Gewindes sind bei dieser Ausgestaltung der Erfindung nicht unterbrochen, wodurch eine Tragfähigkeit der Schraube erhöht ist. Da das Gewinde in den Vollbaustoff von den vorderen Windungen des Gewindes der Schraube geschnitten wird, sind an den weiter hinten befindlichen Windungen keine Schneiden und demzufolge auch keine Unterbrechungen des Gewindes notwendig. Insbesondere sieht die Erfindung vor, dass die Nuten (nur) die Windungen durchsetzen, in denen das Gewinde noch nicht den größten Außendurchmesser aufweist. Es können auch ein oder zwei weitere Windungen desselben Gewindegangs von den Nuten durchsetzt sein, die bereits den größten Gewindeaußendurchmesser aufweisen.

Eine Ausgestaltung der Erfindung sieht vor, dass die Windungen des Gewindes am Gewindefuß axialen Abstand voneinander aufweisen. Eine Gewindesteigung kann ungefähr so groß wie ein Gewindekerndurchmesser sein. Dies hat sich als günstig für ein niedriges Eindrehmoment der Schraube herausgestellt. Der axiale Abstand der Windungen voneinander bewirkt einen Aufnahmeraum für Gesteinsmehl.

Die Erfindung wird nachfolgend anhand eines in der Zeichnung dargestellten Ausführungsbeispiels näher erläutert. Es zeigen:

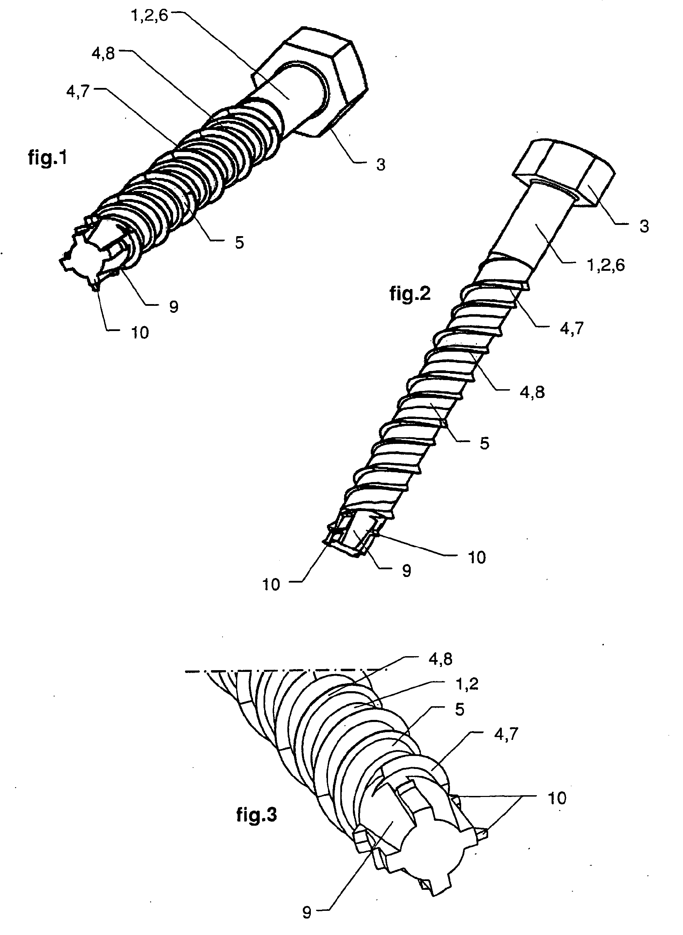

- Figuren 1 und 2:: eine erfindungsgemäße Schraube in perspektivischer Darstellung aus zwei verschiedenen Blickrichtungen; und
- Figur 3: eine größere Darstellung eines vorderen Bereichs der Schraube aus Figuren 1 und 2.

Die in der Zeichnung dargestellte, erfindungsgemäße Schraube ist eine gewindeschneidende Betonschraube 1. Sie weist einen Schaft 2 und einen Schraubenkopf 3 auf. Der Schraubenschaft 2 weist ein Gewinde 4 mit einem Gewindekern 5 und einen gewindelosen Schaftabschnitt 6 auf. Im dargestellten und beschriebenen Ausführungsbeispiel der Erfindung weist das Gewinde 4 zwei Gewindegänge 7, 8 auf, was allerdings nicht zwingend für die Erfindung ist. Beide Gewindegänge 7, 8 weisen einen sägezahnförmigen Querschnitt auf, dessen flachere und längere Flanke dem Schraubenkopf 3 zugewandt ist. Die beiden Gewindegänge 7, 8 sind unterschiedlich hoch, sie weisen verschiedene Außendurchmesser auf. Außerdem ist ihr axialer Abstand voneinander verschieden. Eine Steigung der Betonschraube 1, d.h. der axiale Abstand zweier aufeinander folgender Windungen eines Gewindegangs 7; 8 ist etwas größer als ein Durchmesser des Gewindekerns 5.

An einem vorderen, d.h. dem Schraubenkopf 3 fernen Ende verjüngt sich der Gewindekern 5 konisch. In diesem Bereich verkleinert sich der Außendurchmesser der Gewindegänge 7, 8 entsprechend dem Konus. Eine Höhe der Gewindegänge 7, 8 kann im konischen Bereich des Gewindekerns 5 abnehmen oder gleich bleiben.

Im konischen Bereich des Gewindekerns 5, also im vorderen Bereich der Betonschraube 1, weist der Gewindekern 5 Längsnuten 9 auf, die die Gewindegänge 7, 8 durchsetzen. Die Längsnuten 9 bilden Unterbrechungen der Gewindegänge 7, 8 und bilden zugleich Schneiden 10. Eine Tiefe der Nuten 9 nimmt vom vorderen Ende der Betonschraube 1 zum Ende des konischen Bereichs des Gewindekerns 5 ab, im Bereich eines Übergangs vom konischen Bereich zu einem zylindrischen Bereich des Gewindekerns 5 enden die Längsnuten 9. Im dargestellten und beschriebenen Ausführungsbeispiel der Erfindung weist die Betonschraube 1 vier Längsnuten 9 auf, die äquidistant über den Umfang verteilt angeordnet sind. Eine andere Anzahl und/oder eine andere Verteilung der Längsnuten 9 ist möglich.

Zur Befestigung in einem harten Vollbaustoff wie beispielsweise Beton wird ein Bohrloch im Vollbaustoff angebracht, dessen Durchmesser in etwa einem Außendurchmesser des Gewindegangs 8 mit dem kleineren Außendurchmesser entspricht. Der Durchmesser des Bohrlochs ist also größer als der Durchmesser des Gewindekerns 5 und kleiner als ein Außendurchmesser des Gewindegangs 7 mit dem größeren Außendurchmesser. Die Betonschraube 1 wird vorzugsweise unter Verwendung eines Schlagschraubers, der Drehschläge auf die Betonschraube 1 ausübt, in das Bohrloch eingedreht. Dabei schneiden die Schneiden 10, die durch die Längsnuten 9 an den Gewindegängen 7, 8 ausgebildet sind, ein komplementäres Gewinde in eine Wand des Bohrlochs im Vollbaustoff. Die Längsnuten 9 bilden Taschen zur Aufnahme von Gesteinsmehl zwischen dem Gewindekern 5 und der Wand des Bohrlochs. Solches Gesteinsmehl fällt beim Schneiden des Gewindes in den Vollbaustoff an. Auch kann Gesteinsmehl vom Bohren des Bohrlochs vorhanden sein, wenn das Bohrloch nicht sorgfältig gereinigt worden ist. Die Längsnuten 9 vermeiden, dass sich ein Zwischenraum zwischen der Wand des Bohrlochs und dem Gewindekern 5 im vorderen Bereich der Betonschraube 1, in dem sich die Schneiden 10 befinden und in dem beim Schneiden des Gewindes Gesteinsmehl anfällt, mit Gesteinsmehl zusetzt. Das Zusetzen des Zwischenraums zwischen dem Gewindekern 5 und der Wand des Bohrlochs mit Gesteinsmehl hätte eine höhere Reibung zur Folge, die das Eindrehmoment der Betonschraube 1 erhöhen und die Gefahr eines Schraubenbruchs vergrößern würde.

Die Längsnuten 9 sind breiter als die zwischen ihnen verbliebenen Umfangsabschnitte der Gewindegänge 7, 8. In dem Bereich, in dem die Gewindegänge 7, 8 von den Längsnuten 9 unterbrochen sind, erstrecken sich die Gewindegänge 7, 8 nur ein kurzes Stück in Umfangsrichtung. Das hat sich als günstig für das Schneiden des Gewindes in den Vollbaustoff erwiesen. Außerdem weisen die dadurch breiten Längsnuten 9 ein großes Volumen zur Aufnahme des Gesteinsmehls auf.

## Patentansprüche

1. Gewindeschneidende Schraube, insbesondere Betonschraube, mit einem Gewinde (4) und einem Gewindekem (5), wobei das Gewinde (4) Schneiden (10) bildende Unterbrechungen aufweist, der Gewindekem (5) in einem vorderen Bereich der Schraube (1) konisch geformt ist und die Schraube (1) eine Nut (9) aufweist, die in einer Längsrichtung der Schraube (1) verläuft, die das Gewinde (4) durchsetzt und die Unterbrechungen bildet und die tiefer als das Gewinde (4) hoch ist, so dass sie in den Gewindekern (5) reicht, **dadurch gekennzeichnet, dass** die Tiefe der Nut (9) vom vorderen Ende der Schraube (1) zum Ende des konischen Bereichs des Gewindekerns (5) abnimmt.

2. Gewindeschneidende Schraube nach Anspruch 1, **dadurch gekennzeichnet, dass** die Schraube (1) mehrere über den Umfang verteilt angeordnete Nuten (9) aufweist.

3. Gewindeschneidende Schraube nach Anspruch 1, **dadurch gekennzeichnet, dass** die Schraube (1) die Nut (9) nur in einem vorderen Bereich aufweist.

4. Gewindeschneidende Schraube nach Anspruch 3, **dadurch gekennzeichnet, dass** die Schraube (1) die Nut (9) nur in einem vorderen Bereich aufweist, in dem das Gewinde (4) noch nicht den größten Außendurchmesser aufweist.

5. Gewindeschneidende Schraube nach Anspruch 4, **dadurch gekennzeichnet, dass** die Nut (9) ein oder zwei weitere Windungen desselben Gewindegangs durchsetzt, die bereits den größten Außendurchmesser aufweisen.

6. Gewindeschneidende Schraube nach Anspruch 1, **dadurch gekennzeichnet, dass** die durch die Nut (9) gebildeten Unterbrechungen des Gewindes (4) in Umfangsrichtung länger als eine Erstreckung der verbleibenden Teile des Gewindes (4) in Umfangsrichtung ist.

7. Gewindeschneidende Schraube nach Anspruch 1, **dadurch gekennzeichnet, dass** Windungen des Gewindes (4) an einem Gewindefuß axialen Abstand voneinander aufweisen.

8. Gewindeschneidende Schraube nach Anspruch 7, **dadurch gekennzeichnet, dass** eine Gewindesteigung ungefähr so groß wie ein Durchmesser des Gewindekerns (5) ist.

## Claims

1. Self-tapping screw, especially a concrete screw, having a thread (4) and a thread core (5), the thread (4) having gaps which create cutters (10), the thread core (5) having a conical form in a forward region of the screw (1) and the screw (1) having a groove (9) which extends in the longitudinal direction of the screw (1), interrupts the thread (4) and forms the gaps and which is deeper than the thread (4) is high, so that it extends into the thread core (5), **characterized in that** the depth of the groove (9) decreases from the forward end of the screw (1) to the end of the conical region of the thread core (5).

2. Self-tapping screw according to claim 1, **characterized in that** the screw (1) has a plurality of grooves (9) distributed around the periphery.

3. Self-tapping screw according to claim 1, **characterized in that** the screw (1) has the groove (9) only in a forward region.

4. Self-tapping screw according to claim 3, **characterized in that** the screw (1) has the groove (9) only in a forward region in which the thread (4) does not yet have its greatest outer diameter.

5. Self-tapping screw according to claim 4, **characterized in that** the groove (9) interrupts one or two further turns of the same screw thread that already have their greatest outer diameter.

6. Self-tapping screw according to claim 1, **characterized in that** the gaps in the thread (4) formed by the groove (9) are longer in the peripheral direction than the dimensions of the remaining portions of the thread (4) in the peripheral direction.

7. Self-tapping screw according to claim 1, **characterized in that** turns of the thread (4) at the foot of the thread are spaced apart from one another axially.

8. Self-tapping screw according to claim 7, **characterized in that** the thread pitch is approximately the same as the diameter of the thread core (5).

## Revendications

1. Vis autotaraudeuse, en particulier vis à béton, avec un filet (4) et un fond de filet (5), le filet (4) présentant des discontinuités formant des arêtes vives (10), le fond de filet (5) étant formé de manière conique dans une zone avant de la vis (1) et la vis (1) présentant une rainure (9), laquelle rainure s'étend dans un sens longitudinal de la vis (1), entrecoupe le filet (4) et forme des discontinuités et a une profondeur supérieure à celle du filet (4), de sorte qu'elle arrive au fond de filet (5), **caractérisée en ce que** la profondeur de la rainure (9) diminue de l'extrémité avant de la vis (1) vers l'extrémité de la zone conique du fond de filet (5).

2. Vis autotaraudeuse selon la revendication 1, **caractérisée en ce que** la vis (1) présente plusieurs rainures (9) réparties sur la périphérie.

3. Vis autotaraudeuse selon la revendication 1, **caractérisée en ce que** la vis (1) ne présente la rainure (9) que dans une zone avant.

4. Vis autotaraudeuse selon la revendication 3, **caractérisée en ce que** la vis (1) ne présente la rainure (9) que dans une zone avant, dans laquelle le filet (4) ne présente pas encore le plus grand diamètre extérieur.

5. Vis autotaraudeuse selon la revendication 4, **caractérisée en ce que** la rainure (9) entrecoupe une ou deux autres spires du même pas de vis, lesquelles spires présentent déjà le plus grand diamètre extérieur.

6. Vis autotaraudeuse selon la revendication 1, **caractérisée en ce que** les discontinuités du filet (4) dans le sens périphérique formées par la rainure (9) sont plus longues qu'une extension des éléments restants du filet (4) dans le sens périphérique.

7. Vis autotaraudeuse selon la revendication 1, **caractérisée en ce que** des spires du filet (4) présentent une distance axiale l'une de l'autre au niveau d'un pied de filet.

8. Vis autntaraudeuse selon la revendication 7, **caractérisée en ce qu'**un pas de vis est à peu près aussi grand qu'un diamètre du fond de filet (5).
